# NEW EUROPEAN PATENT SPECIFICATION

(11) **EP 2 313 297 B2**
(45) Date of publication and mention of the opposition decision: **15.03.2017**
(45) Mention of the grant of the patent: 26.10.2011
(21) Application number: 09784916.0
(22) Date of filing: 11.08.2009
(51) Int. Cl.: B60T 7/04, B60T 13/26, B60T 17/18, B60T 7/08, B60P 1/04

(54) **VEHICLE FOR LAYING ROAD SURFACING MATERIAL**
FAHRZEUG ZUM VERLEGEN VON STRASSENBELAGMATERIAL
VÉHICULE DESTINÉ À LA POSE D'UN MATÉRIAU DE REVÊTEMENT ROUTIER

(30) Priority: 23.08.2008 GB 0815452
(43) Date of publication of application: 27.04.2011
(73) Proprietor: Haldex Brake Products Limited, Redditch, Worcestershire B98 9HA (GB)
(72) Inventor: HARRISON, Dudley, Birmingham B27 7AB (GB); SCHERING, Christian, 48691 Vreden (DE)
(74) Representative: Lawson, Alison Christina
(86) International application number: PCT/GB2009/001974
(87) International publication number: WO 2010/023427

(56) References cited:
- EP-A2- 0 860 337
- EP-A2- 1 698 535
- WO-A2-2010/000412
- DE-A1- 19 737 051
- JP-A- 62 258 829
- JP-A- S62 258 829
- JP-A- 2007 045 417
- RU-C1- 2 028 219
- US-A- 5 190 118
- US-A1- 2003 168 908
- US-A1- 2003 168 908

## Description

The present invention relates to a vehicle with a tippable load compartment suitable for use in combination with a road laying machine for use in surfacing a road.

It is known to surface a road using a combination of a vehicle with a tippable load compartment, such as a dumper truck, with a road laying machine which is towed by the vehicle. The road surfacing material, typically asphalt, is placed in the load compartment of the vehicle, and gradually tipped into the road laying machine as the entire combination moves along the road at a crawling pace.

The forcing of the asphalt onto the road surface by the road laying machine results in an opposite reaction force being exerted on the road laying machine and vehicle combination, which acts to push the vehicle forward and to increase the speed of the combination. It is therefore known for the driver to apply a fixed, low level, braking force to provide resistance to this force and to maintain the speed of the combination of the vehicle at the desired generally constant level.

In conventional pneumatic or hydraulic braking systems, this braking force was provided by means of a complex arrangement of valves and regulators. Where the vehicle is provided with an electronic braking system (EBS), the vehicle is provided with an electrical switch which the driver may actuate when the road laying machine is in operation. The EBS is provided with a signal input connected to this electrical switch, and is programmed to apply automatically a constant low level braking force to all the brakes of the vehicle when the switch is actuated to indicate that the road laying machine is in operation. In some cases, however, the designated braking force may not be sufficient to stop the vehicle from speeding up, and, in known systems, if additional braking force is required, the driver has to get out of the driver's cab, and adjust a regulator by means of an interface provided on a EBS diagnostic display unit.

DE 19737051 discloses an apparatus for controlling a pneumatic braking system in which the operating mode of an air compressor is switched to provide a further braking force if additional deceleration of the vehicle is required.

According to a first aspect of the invention we provide a vehicle having a braking system comprising a braking demand input device which is operable by a driver to generate a braking demand signal indicative of the level of vehicle braking required, an electronic braking control unit which receives an electrical input signal representative of the level of vehicle braking indicated by the braking demand signal and which generates an appropriate brake operation output signal for transmission to at least one brake actuator assembly, transmission of a brake operation output signal to a brake actuator assembly causing a brake to operate to apply a braking force to the vehicle, wherein the vehicle also comprises a switch which is connected to the electronic braking control unit and which is operable to transmit a signal to the electronic braking control unit which causes the electronic braking control unit to transmit a brake operation output signal to the brake actuator assembly, the brake operation output signal causing the brake actuator assembly to apply a low level braking force to the vehicle, characterised in that the braking system is further configured such that during application of the low level braking force, operation of the braking demand input device causes the electronic braking control unit to modify the brake operation signal so as to increase the low level braking force by a predetermined amount, the braking demand input device being a brake pedal which is mounted in a driver's cab of the vehicle.

The switch is preferably mounted in a driver's cab of the vehicle.

The vehicle may be provided with a tippable load container.

The vehicle may comprise a tractor and a trailer, in which case, a driver's cab may be provided on the tractor, and a tippable load container provided on the trailer.

An embodiment of the invention will now be described with reference to the accompanying drawings, of which,
FIGURE 1 shows an illustration of a vehicle according to the first aspect of the invention with the load compartment in a first position,
FIGURE 2 shows an illustration of a vehicle according to the first aspect of the invention with the load compartment in a second position, and
FIGURE 3 shows a schematic illustration of the braking system of the vehicle shown in Figures 1 and 2.

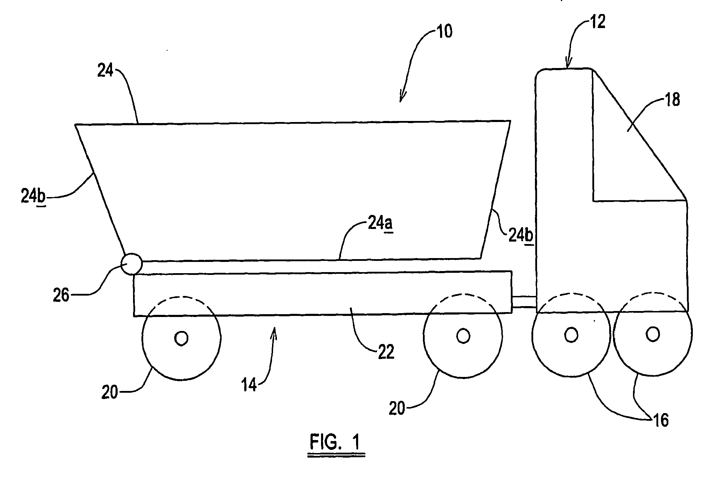

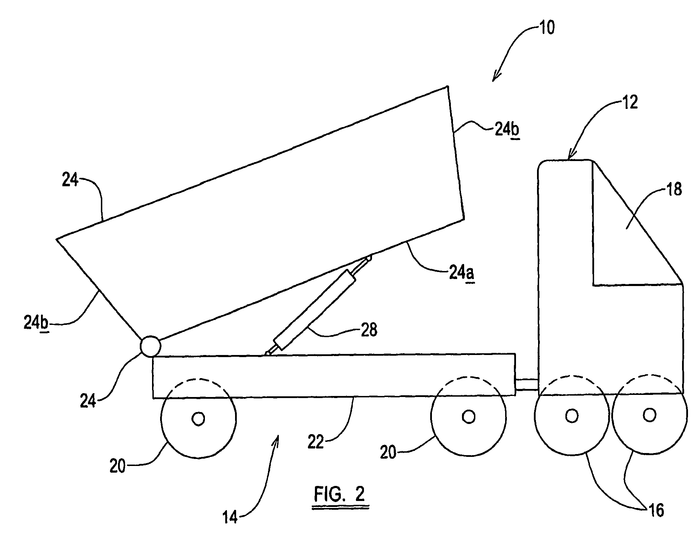

Referring now to Figures 1 and 2, there is shown a vehicle 10 comprising a tractor 12 and a trailer 14 which together form an articulated dumper truck. The tractor 12 has ground engaging wheels 16 and a drives cab 18. The trailer 14 is also provided with ground engaging wheels 20, a chassis 22 and a load container 24 which is mounted on the chassis 22 by means of a pivotal connection 26 towards the rear of the chassis 22. The load container 24 has a base 24a and four side walls 24b which form an open-topped container in which materials, for example asphalt for road surfacing, may be placed.

Means, in this example a hydraulic or pneumatic piston and cylinder arrangement 28, are provided to pivot the load container 24 about the pivotal connection 26 from a first position in which the base of the container 24a is generally parallel to the trailer chassis 22, as illustrated in Figure 1, and a second position in which the base 24a is inclined relative to the trailer chassis 22 so that the end of the base 24a nearest the tractor 12 is higher than the end of the base 24a at the rear of the trailer 14.

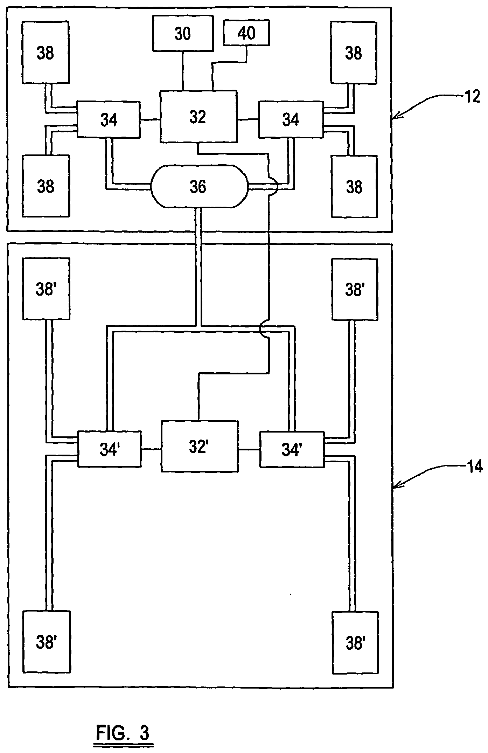

The vehicle 10 has an electronic braking system which is illustrated schematically in Figure 3. The braking system comprises a braking demand input device which in this example is a brake pedal 30 located in the driver's cab 18. The brake pedal 30 is operable by a driver of the vehicle 10 to generate a braking demand signal indicative of the level of vehicle braking required. In this example, the braking demand signal is an electrical signal, and there is an electrical connection between the brake pedal 30 and a electrical signal input of an electronic braking control unit (ECU) 32. It should be appreciated, however, that the braking demand signal could be a pneumatic or hydraulic signal which is converted to an electrical signal by means of a pressure transducer.

In this example, the ECU 32 is mounted on the tractor 12, with a second ECU 32' being provided on the trailer chassis 22 with an electrical connection between the tractor ECU 32 and the trailer ECU 32' extending between the tractor 12 and the trailer 14. The ECUs 32, 32' each include a microprocessor and a non-volatile memory in which is stored information concerning the braking characteristics of the tractor 12 and trailer 14 respectively, and are provided with an output for an electrical brake operation output signal. The braking system also includes at least one modulator 34 which is electrically connected to the ECU 32, and operable, on receipt of an electrical braking operation output signal from the ECU 32 to regulate flow of compressed air from a source of compressed air 36 to one or more pneumatically operable brake actuators 38, each brake actuator 38 operating a brake associated with a wheel 16 of the tractor 12. The trailer 14 is also provided with at least one modulator 34', which is electrically connected to the trailer ECU 32', and operable, on receipt of an electrical braking operation output signal from the ECU 32' to regulate flow of compressed air to one or more pneumatically operable brake actuators 38', each brake actuator 38' operating a brake associated with a wheel 20 of the trailer. In this example, the tractor 12 and trailer 14 are each provided with two modulators 34, 34' each of which is associated with the brake actuators 38, 38' associated with the wheels 16, 20 on one side of the vehicle 10.

In normal use, the electronic braking system operates as a conventional electronic braking system. If braking of the vehicle is required, the driver presses the brake pedal 30, regulating the force applied to the brake pedal 30 according the amount of braking force required. The resulting braking demand signal, which indicates the braking force required, is transmitted to the ECUs 32, 32' which use the information stored in their memory to generate an appropriate electrical brake operation output signal. This signal is transmitted to each of the modulators 34, 34' which respond by allowing pressurised air to flow from the compressed air source 36 to the brake actuators 36, 36' to an extent governed by the electrical brake operation output signal. The build up of pressure in the brake actuators 38, 38' causes the brakes to apply a braking force to the trailer wheels 16, 20, the braking force being dependent on the air pressure in the brake actuators 38, 38'. When braking of the vehicle is no longer required, and the driver releases the brake pedal 30, the pressurised air is exhausted from the brake actuators 38 and the braking force removed.

A vehicle of this type may be used in conjunction with a road laying machine towed behind the trailer 14. In this case, the load container 24 is filled with a road surfacing material such as asphalt, and tipped so that the contents is gradually poured into the road laying machine as the combination moves slowly and at a generally constant velocity along the road. The forcing of the road surfacing material onto the road causes an opposite reaction force which, if unchecked, acts on the trailer 14 so as to increase the speed of the vehicle 10. In order to keep the speed of the combination at the designated level it is therefore necessary for a braking force to be applied to the vehicle 10.

The braking system is therefore provided with an electrical switch 40 which, in this example, is mounted in the driver's cab 18. The switch 40 is electrically connected to the ECU 32, and when actuated, causes the ECUs 32, 32' to transmit an appropriate braking operation output signal to be transmitted to the modulators 34, 34' to cause the brake actuators 38, 38' to operate and the brakes to apply a low level braking force to all the wheels 16, 20. The driver may therefore actuate this switch when commencing a road laying operation so that the resulting low level braking force counteracts the reaction force from the new road surface on the road laying machine.

It is possible, however, that in some circumstances, this low level braking force is not sufficient to maintain the speed of the vehicle at the desired level, and the vehicle may still speed up as the road laying progresses.

The braking system is therefore also configured such that if, while the constant low level braking force is applied to the trailer wheels 20, the driver actuates and then releases the brake pedal 30, a braking demand signal is transmitted to the ECU 32. The ECU 32 is programmed to derive from the braking demand signal the braking operation output signal required to generate the desired level of braking, as in normal braking events, but upon release of the brake pedal 30 the ECU 32 is programmed automatically to generate a brake operation demand signal which will ensure that the braking force on the wheels 20 is increased by a predetermined amount over the low level force that was present before the driver intervention. In this example, the ECU 32 is programmed such that the braking force is increased by 0.2 bar each time the brake pedal 30 is pressed and released during a road laying operation.

The driver may therefore easily increase the braking force applied to the vehicle 10 during a road laying operation so as to keep the vehicle travelling at a generally constant speed, simply by actuating and releasing the brake pedal 30. Ensuring that the normal level of braking force according to driver demand is set until the brake pedal 30 is released ensures that emergency braking can easily be achieved without the driver having to first operate switch 40 to remove the low level braking force.

It should be appreciated that the vehicle 10 need not comprise a tractor 12 and trailer 14 - it may be a single, non-articulated unit, and the braking system need not be exactly as described above. The invention may be applied to any other type of braking system in which an electronic control unit is used to control the braking force applied by the vehicle brakes.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle (10) having a braking system comprising a braking demand input device (30) which is operable by a driver to generate a braking demand signal indicative of the level of vehicle braking required, an electronic braking control unit (32) which receives an electrical input signal representative of the level of vehicle braking indicated by the braking demand signal and which generates an appropriate brake operation output signal for transmission to at least one brake actuator assembly (34,38), transmission of a brake operation output signal to a brake actuator assembly (34,38) causing a brake to operate to apply a braking force to the vehicle (10), wherein the vehicle (10) also comprises a switch (40) which is connected to the electronic braking control unit (32) and which is operable to transmit a signal to the electronic braking control unit (32) which causes the electronic braking control unit to transmit a brake operation output signal to the brake actuator assembly (34,38), the brake operation signal causing the brake actuator assembly (34,38) to apply a low level braking force to the vehicle (10), **characterised in that** the braking system is further configured such that during application of the low level braking force, operation of the braking demand input device (30) causes the electronic braking control unit (32) to modify the brake operation signal so as to increase the low level braking force by a predetermined amount, the braking demand input device (30) being a brake pedal which is mounted in a driver's cab of the vehicle.

2. A vehicle (10) according to claim 1 wherein the switch (40) is mounted in a driver's cab (18) of the vehicle (10).

3. A vehicle (10) according to any preceding claim wherein the vehicle (10) is provided with a tippable load container (24).

4. A vehicle (10) according to any preceding claim wherein the vehicle comprises a tractor (12) and a trailer (14).

5. A vehicle (10) according to claim 4 wherein a driver's cab (18) is provided on the tractor (12), and a tippable load compartment (24) provided on the trailer (14).

## Patentansprüche

1. Fahrzeug (10), das ein Bremssystem aufweist, umfassend eine Bremsanforderungs-Eingabevorrichtung (30), die von einem Fahrer betätigt werden kann, um ein Bremsanforderungssignal zu erzeugen, das den erforderlichen Pegel des Fahrzeugbremsens angibt, eine elektrische Bremssteuerungseinheit (32), die ein elektrisches Eingabesignal empfängt, die den von dem Bremsanforderungssignal angegebenen Pegel des Fahrzeugbremsens darstellt und die ein entsprechendes Bremsbetätigungs-Ausgabesignal zur Übertragung an zumindest einen Bremszylinderaufbau (34, 38) erzeugt, wobei die Übertragung eines Bremsbetätigungs-Ausgabesignals an einen Bremszylinderaufbau (34, 38) eine Bremse veranlasst zu arbeiten, um eine Bremskraft auf das Fahrzeug (10) auszuüben, wobei das Fahrzeug (10) auch einen Schalter (40) umfasst, der mit der elektronischen Bremssteuerungseinheit (32) verbunden und dazu funktionsfähig ist, ein Signal an die elektronische Bremssteuerungseinheit (32) zu übertragen, welches die elektronische Bremssteuerungseinheit veranlasst, ein Bremsbetätigungs-Ausgabesignal an den Bremszylinderaufbau (34, 38) zu übertragen, wobei das Bremsbetätigungssignal den Bremszylinderaufbau (34, 38) veranlasst, eine leistungsarme Bremskraft auf das Fahrzeug (10) auszuüben, **dadurch gekennzeichnet, dass** das Bremssystem weiterhin so konfiguriert ist, dass während der Anwendung der leistungsarmen Bremskraft die Betätigung der Bremsanforderungs-Eingabevorrichtung (30) die elektronische Bremssteuerungseinheit (32) veranlasst, das Bremsbetätigungssignal so zu modifizieren, dass sie die leistungsarme Bremskraft um einen vorgegebenen Betrag erhöht, wobei die Bremsanforderungs-Eingabevorrichtung (30) ein Bremspedal ist, das in der Fahrerkabine des Fahrzeugs eingebaut ist.

2. Fahrzeug (10) nach Anspruch 1, wobei der Schalter (40) in einer Fahrerkabine (18) des Fahrzeugs (10) eingebaut ist.

3. Fahrzeug (10) nach irgendeinem vorhergehenden Anspruch, wobei das Fahrzeug (10) mit einem kippbaren Ladebehälter (24) ausgestattet ist.

4. Fahrzeug (10) nach irgendeinem vorhergehenden Anspruch, wobei das Fahrzeug eine Zugmaschine (12) und einen Anhänger (14) umfasst.

5. Fahrzeug (10) nach Anspruch 4, wobei eine Fahrerkabine (18) auf der Zugmaschine (12) und ein kippbarer Laderaum (24) auf dem Anhänger (14) vorgesehen sind.

## Revendications

1. Véhicule (10) doté d'un système de freinage comprenant un dispositif d'entrée d'instruction de freinage (30) qui peut être actionné par un conducteur pour générer un signal d'instruction de freinage indiquant le niveau de freinage du véhicule requis, une unité de commande de freinage électronique (32) qui reçoit un signal d'entrée électrique représentatif du niveau de freinage du véhicule indiqué par le signal d'instruction de freinage et qui génère un signal de sortie d'opération de freinage adapté à la transmission à au moins un ensemble actionneur de freinage (34, 38), la transmission d'un signal de sortie d'opération de freinage à un ensemble actionneur de freinage (34, 38) amenant un frein à appliquer une force de freinage sur le véhicule (10), le véhicule (10) comprenant également un interrupteur (40) relié à l'unité de commande de freinage électronique (32) et pouvant être actionné pour transmettre un signal à l'unité de commande de freinage électronique (32), ce qui amène l'unité de commande de freinage électronique (32) à transmettre un signal de sortie d'opération de freinage à l'ensemble actionneur de freinage (34, 38), le signal d'opération de freinage amenant l'ensemble actionneur de freinage (34, 38) à appliquer une force de freinage de niveau faible sur le véhicule (10), **caractérisé en ce que** le système de freinage est en outre conçu de sorte que, pendant l'application de la force de freinage de niveau faible, l'opération du dispositif d'entrée d'instruction de freinage amène l'unité de commande de freinage électronique (32) à modifier le signal d'opération de freinage afin d'augmenter la force de freinage selon une importance prédéterminée, le dispositif d'entrée d'instruction de freinage (30) étant une pédale de frein montée dans une cabine de conduite du véhicule.

2. Véhicule (10) selon la revendication 1, dans lequel le commutateur (40) est monté dans la cabine de conduite (18) du véhicule (10).

3. Véhicule (10) selon l'une quelconque des revendications précédentes, dans lequel le véhicule (10) est muni d'un conteneur de charge basculant (24).

4. Véhicule (10) selon l'une quelconque des revendications précédentes, dans lequel le véhicule comporte un tracteur (12) et une remorque (14).

5. Véhicule (10) selon la revendication 4, dans lequel une cabine de conduite (18) est située sur le tracteur (12) et un compartiment de charge basculant (24) est situé sur la remorque (14).
